# EUROPÄISCHE PATENTSCHRIFT

(11) **EP 2 649 661 B1**
(45) Veröffentlichungstag und Bekanntmachung des Hinweises auf die Patenterteilung: **01.06.2016**
(21) Anmeldenummer: 11776395.3
(22) Anmeldetag: 20.10.2011
(51) Int. Cl.: H01M 4/38, H01M 10/38, H01M 10/39

(54) **NATRIUM-CHALKOGEN-ZELLE**
NATRIUM-CHALCOGEN CELL
CELLULE SODIUM-CHALCOGÉNURE

(30) Priorität: 09.12.2010 DE 102010062713
(43) Veröffentlichungstag der Anmeldung: 16.10.2013
(73) Patentinhaber: Robert Bosch GmbH, 70442 Stuttgart (DE)
(72) Erfinder: MOC, Andre, 02779 Grossschoenau (DE); EISELE, Ulrich, 70199 Stuttgart (DE); LOGEAT, Alan, 70178 Stuttgart (DE)
(86) Internationale Anmeldenummer: PCT/EP2011/068284
(87) Internationale Veröffentlichungsnummer: WO 2012/076229

(56) Entgegenhaltungen:
- DE-C2- 2 810 320
- JP-A- 63 274 623
- US-A- 4 268 587

## Beschreibung

Die vorliegende Erfindung betrifft eine Natrium-Chalkogen-Zelle und ein Herstellungsverfahren für eine derartige Zelle.

### Stand der Technik

Natrium-Schwefel-Zellen werden herkömmlicherweise bei einer Temperatur (∼300°C) betrieben, bei der Schwefel und Natrium flüssig sind, um eine ausreichende Leitfähigkeit und einen ausreichenden Transport von Natriumionen sowie einen ausreichenden Kontakt zwischen den Reaktanden (Schwefel, Natriumionen und Elektronen) zu gewährleisten. Als Kathodenmaterial wird bei derartigen Hochtemperatur-Natrium-Schwefel-Zellen üblicherweise ein Schwefel-Graphit-Verbundwerkstoff eingesetzt. Ein solches Kathodenmaterial ist zum Beispiel aus der US 4 268 587 bekannt. Die Patentschrift DE 28 10 320 C2 beschreibt zudem die Verwendung einer Kathode in in einer Alkalimetall-Chalkogen-Zelle, welche ein sowohl elektronisch leitfähiges als auch ionisch leitfähiges Zeolith-Kohlenstoff-Kompositmaterial enthalt.

Natrium-Schwefel-Zellen mit einer Schwefel-Graphit-Kathode können jedoch nicht bei Raumtemperatur betrieben werden, da die Natriumionenleitfähigkeit von festem Schwefel und Graphit nicht ausreicht. Darüber hinaus kann beim wiederholten Laden und Entladen einer derartigen Natrium-Schwefel-Zelle ein phasenumwandlungsbedingter, irreversibler Kapazitätsverlust auftreten.

Die Verwendung von flüssigen Elektrolyten kann bei Natrium-Schwefel-Zellen dazu führen, dass die Natriumanode mit dem Elektrolyten, dem Elektrolytlösungsmittel beziehungsweise Polysulfiden reagiert und korrodiert. Zudem können sich beim wiederholten Laden und Entladen Natriumdendrite zwischen den Elektroden bilden und die Zelle kurzschließen.

### Offenbarung der Erfindung

Gegenstand der vorliegenden Erfindung ist eine Natrium-Chalkogen-Zelle, insbesondere eine Natrium-Schwefel-Zelle oder eine Natrium-Sauerstoff-Zelle, welche eine Anode (negative Elektrode) und eine Kathode (positive Elektrode) umfasst, wobei die Anode Natrium und die Kathode mindestens ein Chalkogen, insbesondere Schwefel und/oder Sauerstoff, umfasst. Die Anode und die Kathode sind dabei vorzugsweise durch mindestens einen Natriumionen leitenden und Elektronen nicht leitenden Festkörperelektrolyten separiert. Darüber hinaus umfasst die Kathode erfindungsgemäss mindestens einen Natriumionen und Elektronen leitenden Festkörperelektrolyten.

Im Sinn der vorliegenden Erfindung kann insbesondere ein Material als Natriumionen leitend verstanden werden, welches bei 25 °C eine Natriumionenleitfähigkeit von ≥ 1·10⁻⁶ S/cm aufweist. Als Elektronen nicht leitend kann im Sinn der vorliegenden Erfindung ein Material verstanden werden, welches bei 25 °C eine Elektronenleitfähigkeit von < 1·10⁻⁸ S/cm aufweist.

Eine Separation der Anode und Kathode durch einen Natriumionen leitenden und Elektronen nicht leitenden Festkörperelektrolyten hat den Vorteil, dass auf diese Weise Kurzschlüsse verhindert werden können. Ein Natriumionen und Elektronen leitender Festkörperelektrolyt als Kathodenmaterial hat den Vorteil, dass auch bei Raumtemperatur eine ausreichende Natriumionenleitfähigkeit gewährleistet werden kann. So kann vorteilhafterweise eine Tieftemperatur/(Raumtemperatur)-Natrium-Schwefel-Zelle auf Festkörperbasis zur Verfügung gestellt werden. Auf flüssige und gegebenenfalls entflammbare Elektrolyten kann dabei verzichtet werden. So kann vorteilhafterweise eine Zelle mit verbesserter Langzeitstabilität und Sicherheit bereitgestellt werden. Zudem kann ein Natriumionen und Elektronen leitender Festkörperelektrolyt zugleich als Stromleiter fungieren, so dass auf zusätzliche Additive zur Erhöhung der elektrischen Leitfähigkeit verzichtet und die Gesamtenergiedichte der Zelle optimiert werden kann.

Erfindungsgemäss umfasst die Kathode mindestens ein Leitungselement aus einem Natriumionen und Elektronen leitenden Festkörperelektrolyten. Über ein derartiges Leitungselement können vorteilhafterweise sowohl Natriumionen als auch Elektronen zum Chalkogenreaktionspartner transportiert werden.

Das Leitungselement kann zum Beispiel in Form eines porösen, beispielsweise schwammartigen, Körpers oder in Form eines Draht- oder Fasergeflechts, beispielsweise aus Nanodrähten oder -fasern, ausgebildet sein. Unter Nanodrähten beziehungsweise -fasern können dabei insbesondere Drähte oder Fasern mit einem durchschnittlichen Durchmesser von ≤ 500 nm, beispielsweise von ≤ 100 nm, verstanden werden. Es ist jedoch ebenso möglich, dass die Kathode eine Vielzahl von, beispielsweise stab-, platten- oder gitterförmigen, Leitungselementen umfasst.

Im Rahmen einer weiteren Ausführungsform kontaktiert ein Abschnitt des Leitungselements beziehungsweise der Leitungselemente den Natriumionen leitenden und Elektronen nicht leitenden Festkörperelektrolyten und ein anderer Abschnitt des Leitungselements beziehungsweise der Leitungselemente einen Kathodenstromkollektor. Auf diese Weise kann eine gute Natriumionen und Elektronenleitung gewährleistet werden. Beispielsweise kann ein Abschnitt eines, in Form eines porösen Körpers oder Draht- oder Fasergeflechts ausgebildeten Leitungselements den Natriumionen leitenden und Elektronen nicht leitenden Festkörperelektrolyten und ein anderer Abschnitt des, in Form eines porösen Körpers oder Draht- oder Fasergeflechts ausgebildeten Leitungselements den Kathodenstromkollektor kontaktieren.

Im Rahmen einer weiteren Ausführungsform umfasst die Kathode eine Vielzahl von Leitungselementen aus einem Natriumionen und Elektronen leitenden Festkörperelektrolyten, von denen jeweils ein Abschnitt den Natriumionen leitenden und Elektronen nicht leitenden Festkörperelektrolyten und ein anderer Abschnitt den Kathodenstromkollektor kontaktiert. Auf diese Weise kann eine besonders gute Natriumionen und Elektronenleitung gewährleistet werden. Beispielsweise kann die Kathode eine Vielzahl von ebenen oder gewölbten, zueinander beabstandeten platten- oder gitterförmigen Leitungselementen umfassen, welche jeweils einerseits den Natriumionen leitenden und Elektronen nicht leitenden Festkörperelektrolyten und andererseits den Kathodenstromkollektor kontaktieren. Die Leitungselemente können dabei zueinander im Wesentlichen parallel angeordnet sein. Beispielsweise können die Leitungselemente ähnlich den Lamellen einer Jalousie bezüglich einander angeordnet sein. Bezüglich des Natriumionen leitenden und Elektronen nicht leitenden Festkörperelektrolyten und des Kathodenstromkollektors können die Leitungselemente im Wesentlichen senkrecht angeordnet sein.

Erfindungsgemäss sind auf dem oder den Leitungselement/en Strukturen aus einem Natriumionen und Elektronen leitenden Festkörperelektrolyten ausgebildet sind. Durch die Strukturen wird vorteilhafterweise die Oberfläche des Leitungselements und damit die für die Natrium-Chalkogen-Redoxreaktion zur Verfügung stehende Fläche vergrössert. Bei den Strukturen kann es sich beispielsweise um Strukturen im Bereich von einigen Mikro-oder Nanometern handeln.

Die Leitungselemente und Strukturen können sowohl aus gleichen als auch aus unterschiedlichen Natriumionen und Elektronen leitenden Festkörperelektrolyten ausgebildet sein. Insbesondere können die Leitungselemente und Strukturen aus dem gleichen Natrium und Elektronen leitenden Festkörperelektrolyten ausgebildet sein.

Im Rahmen einer weiteren Ausführungsform sind die Strukturen durch, beispielsweise nadelförmige, Natriumionen und Elektronen leitende Festkörperelektrolytkristalle ausgebildet. Derartige Strukturen können beispielsweise durch eine Hydrothermalsynthese auf dem Leitungselement ausgebildet sein.

Im Rahmen einer weiteren Ausführungsform umfasst der Natriumionen und Elektronen leitende Festkörperelektrolyt, insbesondere der Leitungselemente und/oder Strukturen, ein Natriumtitanat, insbesondere welches dreiwertiges Titan aufweist. Insbesondere kann der Natriumionen und Elektronen leitende Festkörperelektrolyt aus einem Natriumtitanat, insbesondere welches dreiwertiges Titan aufweist, ausgebildet sein. Unter einem Natriumtitanat kann im Rahmen der vorliegenden Erfindung sowohl ein reines Natriumtitanat als auch ein Natriumtitanat-Mischoxid beziehungsweise ein dotiertes Natriumtitanat verstanden werden, welches ein oder mehrere Fremdatome (andere Metallkationen als Natrium und Titan), insbesondere Fremdatomoxide, umfasst, insbesondere wobei die Zahl der Fremdatome insgesamt > 0 % bis ≤ 10 %, zum Beispiel > 0 % bis ≤ 1 %, bezogen auf die Zahl der Titanatome, beträgt. Natriumtitanate, welche dreiwertiges Titan aufweisen, können vorteilhafterweise eine höhere Elektronenleitfähigkeit als Natriumtitanate, die ausschließlich vierwertiges Titan umfassen, aufweisen. Daher eignen sich dreiwertiges Titan umfassende Natriumtitanate insbesondere als Natriumionen und Elektronen leitende Festkörperelektrolyten.

Bei einem Natriumtitanat-Mischoxid beziehungsweise einem dotierten Natriumtitanat kann vorteilhafterweise die Natriumionen- und Elektronenleitfähigkeit durch Einstellen der Art und Menge an Fremdatomen eingestellt werden.

Insbesondere kann das dreiwertiges Titan umfassende Natriumtitanat ein Natriumtitanat-Mischoxid sein, welches ein oder mehrere Fremdatomoxide umfasst, welche ausgewählt sind aus der Gruppe bestehend aus Natriumoxid, Lithiumoxid, Magnesiumoxid, Calciumoxid, Bariumoxid, Zinkoxid, Eisenoxid, Aluminiumoxid, Galliumoxid, Zirkoniumoxid, Manganoxid, Siliciumoxid, Nioboxid, Tantaloxid und Bismutoxid, beziehungsweise kann das dreiwertiges Titan umfassende Natriumtitanat mit einem oder mehreren Fremdatomen dotiert sein, welche ausgewählt sind aus der Gruppe bestehend aus Natrium, Lithium, Magnesium, Calcium, Barium, Zink, Eisen, Aluminium, Gallium, Zirkonium, Mangan, Silicium, Niob, Tantal und Bismut. Beispielsweise kann das dreiwertiges Titan umfassende Natriumtitanat-Mischoxid ein oder mehrere Fremdatomoxide umfassen, welche ausgewählt sind aus der Gruppe bestehend aus Natriumoxid, Lithiumoxid, Magnesiumoxid, Calciumoxid, Bariumoxid, Mangan(II)oxid, Zinkoxid, Eisen(II)oxid, Aluminiumoxid, Galliumoxid, Niob(lll)oxid, Mangan(III)oxid, Eisen(III)oxid, Zirkoniumoxid, Mangan(IV)oxid, Siliciumoxid, Niob(V)oxid, Tantaloxid und Bismut(V)oxid, beziehungsweise kann das dreiwertiges Titan umfassende Natriumtitanat mit einem oder mehreren Fremdatomen dotiert sein, welche ausgewählt sind aus der Gruppe bestehend aus Natrium, Lithium, Magnesium, Calcium, Barium, Mangan(II), Zink, Eisen(II), Aluminium, Gallium, Niob(III), Mangan(III), Eisen(III), Zirkonium, Mangan(IV), Silicium, Niob(V), Tantal und Bismut(V).

Vorzugsweise sind dabei Titanplätze des Natriumtitanats anstatt mit Titan mit Fremdatomen besetzt. Beispielsweise können Titan(III)-Plätze mit Aluminium, Gallium, Niob(III), Mangan(III) und/oder Eisen(III) und/oder mit Magnesium, Calcium, Barium, Mangan(II), Zink und/oder Eisen(II) und Zirkonium, Mangan(IV) und/oder Silicium und/oder mit Natrium und/oder Lithium und Niob(V), Tantal und/oder Bismut(V) besetzt sein.

Im Rahmen einer weiteren Ausführungsform umfasst der Natriumionen und Elektronen leitende Festkörperelektrolyt, insbesondere der Leitungselemente und/oder Strukturen, ein dreiwertiges Titan aufweisendes Natriumtitanat, insbesondere ein Natriumtitanat der allgemeinen Formel (1):

Na₂Ti^{IV}ₙ₋ₓTi^{III}ₓO_{2n+1-x/2}:MO

wobei 2 ≤ n ≤ 10 und 0 ≤ x ≤ n ist und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid, also Na₂Ti^{IV}ₙ₋ₓTi^{III}ₓO_{2n+1-x/2} mit 2 ≤ n ≤ 10 und 0 ≤ x ≤ n, steht.. Insbesondere kann der Natriumionen und Elektronen leitende Festkörperelektrolyt aus einem Natriumtitanat der allgemeinen Formel (1) ausgebildet sein. Im Sinn der vorliegenden Erfindung kann der Doppelpunkt (:) in Formel (1) und der später erläuterten Formel (2) insbesondere derart verstanden werden, dass in der Summenformel das Titanoxid teilweise mit einem oder mehreren Fremdatomoxiden ersetzt sein kann (Mischoxid/Dotierung). Natriumtitanate, die dreiwertiges Titan aufweisen, insbesondere der allgemeinen Formel (1), haben sich als Natriumionen und Elektronen leitende Festkörperelektrolyten als vorteilhaft erwiesen.

Im Rahmen einer weiteren Ausführungsform umfasst der Natriumionen leitende und Elektronen nicht leitende Festkörperelektrolyt ein Material, welches ausgewählt ist aus der Gruppe bestehend aus β-Aluminiumoxid, insbesondere texturiertem β-Aluminiumoxid, Natriumtitanaten des vierwertigen Titans (nur Titan(IV) nicht Titan(III) aufweisende Natriumtitanate) und Mischungen, insbesondere Verbundwerkstoffen, davon. Insbesondere kann der Natriumionen leitende und Elektronen nicht leitende Festkörperelektrolyt aus einem derartigen Material ausgebildet sein. Unter texturiertem β-Aluminiumoxid kann dabei insbesondere ein β-Aluminiumoxid verstanden werden, welches eine gerichteten, beispielsweise mittels eines elektrischen und/oder magnetischen Feldes erzeugten, Aufbau, insbesondere zur Erhöhung der Natriumionenleitfähigkeit, aufweist.

Insbesondere kann das Natriumtitanat des vierwertigen Titans ein Natriumtitanat-Mischoxid sein, welches ein oder mehrere Fremdatomoxide umfasst, welche ausgewählt sind aus der Gruppe bestehend aus Natriumoxid, Lithiumoxid, Magnesiumoxid, Calciumoxid, Bariumoxid, Zinkoxid, Eisenoxid, Aluminiumoxid, Galliumoxid, Zirkoniumoxid, Manganoxid, Siliciumoxid, Nioboxid, Tantaloxid und Bismutoxid, beziehungsweise kann das Natriumtitanat des vierwertigen Titans mit einem oder mehreren Fremdatomen dotiert sein, welche ausgewählt sind aus der Gruppe bestehend aus Natrium, Lithium, Magnesium, Calcium, Barium, Zink, Eisen, Aluminium, Gallium, Zirkonium, Mangan, Silicium, Niob, Tantal und Bismut. Beispielsweise kann das Natriumtitanat(IV)-Mischoxid ein oder mehrere Fremdatomoxide umfassen, welche ausgewählt sind aus der Gruppe bestehend aus Natriumoxid, Lithiumoxid, Magnesiumoxid, Calciumoxid, Bariumoxid, Mangan(II)oxid, Zinkoxid, Eisen(II)oxid, Aluminiumoxid, Galliumoxid, Niob(III)oxid, Mangan(III)oxid, Eisen(III)oxid, Zirkoniumoxid, Mangan(IV)oxid, Siliciumoxid, Ni-ob(V)oxid, Tantaloxid und Bismut(V)oxid, beziehungsweise kann das Natriumtitanat des vierwertigen Titans mit einem oder mehreren Fremdatomen dotiert sein, welche ausgewählt sind aus der Gruppe bestehend aus Natrium, Lithium, Magnesium, Calcium, Barium, Mangan(II), Zink, Eisen(II), Aluminium, Gallium, Niob(III), Mangan(III), Eisen(III), Zirkonium, Mangan(IV), Silicium, Niob(V), Tantal und Bismut(V).

Titan(IV)-Plätze können beispielsweise mit Zirkonium, Mangan(IV) und/oder Silicium und/oder mit Aluminium, Gallium, Niob(III), Mangan(III) und/oder Eisen(III) und Niob(V), Tantal und/oder Bismut(V) besetzt sein.

Im Rahmen einer weiteren Ausführungsform umfasst der Natriumionen leitende und Elektronen nicht leitende Festkörperelektrolyt ein Natriumtitanat des vierwertigen Titans, insbesondere ein Natriumtitanat der allgemeinen Formel (2):

Na₂Ti^{IV}ₙO₂ₙ₊₁:MO

wobei 2 ≤ n ≤ 10 ist und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid, also Na₂Ti^{IV}ₙO₂ₙ₊₁ mit 2 ≤ n ≤ 10, steht. Insbesondere kann der Natriumionen leitende und Elektronen nicht leitende Festkörperelektrolyt aus einem derartigen Natriumtitanat ausgebildet sein. Natriumtitanate des vierwertigen Titans, wie Na₂Ti^{IV}ₙO₂ₙ₊₁, mit 2≤ n ≤ 10, haben sich insbesondere als Natriumionen leitende und Elektronen nicht leitende Festkörperelektrolyten als vorteilhaft erwiesen.

Im Rahmen einer weiteren Ausführungsform ist die Anode aus metallischem Natrium oder einer Natriumlegierung, insbesondere aus metallischem Natrium, ausgebildet ist. So kann vorteilhafterweise eine hohe Maximalspannung erzielt werden.

Im Rahmen einer weiteren Ausführungsform ist das Chalkogen Schwefel und/oder Sauerstoff, insbesondere Schwefel. Der Natrium und Elektronen leitende Festkörper kann insbesondere mit dem Chalkogen infiltriert sein.

Hinsichtlich weiterer Merkmale und Vorteile der erfindungsgemäßen Natrium-Chalkogen-Zelle wird hiermit explizit auf die Erläuterungen im Zusammenhang mit dem erfindungsgemäßen Verfahren und der Figurenbeschreibung verwiesen.

Ein weiterer Gegenstand der vorliegenden Erfindung ist ein Verfahren zur Herstellung einer erfindungsgemäßen Natrium-Chalkogen-Zelle, umfassend die Verfahrensschritte:
a) Bereitstellen eines Leitungselements aus einem Natriumionen und Elektronen leitenden Festkörperelektrolyten und
b) Ausbilden von Festkörperelektrolytstrukturen, insbesondere Festkörperelektrolytkristallen, auf dem Leitungselement, insbesondere durch Hydrothermalsynthese,
wobei die in Verfahrensschritt b) ausgebildeten Festkörperelektrolytstrukturen, insbesondere Festkörperelektrolytkristalle, Natriumionen und Elektronen leitend sind oder in einem Verfahrensschritt c) in Natriumionen und Elektronen leitende Festkörperelektrolytstrukturen, insbesondere Festkörperelektrolytkristalle, umgewandelt werden. Beispielsweise können die in Verfahrensschritt b) ausgebildeten Festkörperelektrolytstrukturen, insbesondere Festkörperelektrolytkristalle, nadelförmig sein.

Die Natriumionen- und Elektronenleitfähigkeit und/oder die Kristallstruktur der Festkörperelektrolytkristalle können in Verfahrensschritt b) beispielsweise durch die Temperatur, den Druck, die zeitliche Dauer und/oder das Lösungsmittel der Hydrothermalsynthese eingestellt werden. Die Umwandlung in Natriumionen und Elektronen leitende Festkörperelektrolytkristalle kann in Verfahrensschritt c) beispielsweise durch eine thermische Behandlung beziehungsweise Sinterung, beispielsweise bei einer Temperatur in einem Bereich von ≥ 400 °C bits ≤ 1100 °C, und/oder unter reduzierenden Bedingungen, beispielsweise unter einer wasserstoffhaltigen Atmosphäre, erfolgen.

Das Leitungselement kann ebenfalls durch eine Hydrothermalsynthese, gegebenenfalls mit einem anschließenden Umwandlungsverfahrensschritt, hergestellt werden. Zum Beispiel kann so zunächst ein Natrium und Elektronen leitender Feststoff hergestellt werden, welcher anschließend, beispielsweise durch ein Pressverfahren, zu dem Leitungselement geformt wird.

Die Hydrothermalsynthese kann beispielsweise in einem Autoklaven erfolgen. Zur Synthese von Natriumtitanaten können zum Beispiel metallisches Titan und/oder eine titanhaltige Metallmischung beziehungsweise Metalllegierungen und/oder eine oder mehrere Titanverbindungen, wie Titanoxid und/oder Titannitrid, beispielsweise bei einer Temperatur in einem Bereich von ≥ 130 °C bis ≤ 210 °C, in einer wässrigen Natriumhydroxidlösung, beispielsweise mit einer Konzentration in einem Bereich von ≥ 5 mol/l bis ≤ 15 mol/l, umgesetzt werden. Die Reaktionszeit kann dabei beispielsweise in einem Bereich von ≥ 1 h bis ≤ 72 h liegen.

Anschließend kann das Reaktionsprodukt abfiltriert, gegebenenfalls gewaschen und getrocknet werden. Durch eine thermische Behandlung, insbesondere unter reduzierenden Bedingungen, beispielsweise unter einer Wasserstoffhaltigen Atmosphäre, kann vierwertiges Titan zumindest teilweise in dreiwertiges Titan umgewandelt werden. So kann vorteilhafterweise die Elektronenleitfähigkeit des Festkörperelektrolyten eingestellt werden.

Hinsichtlich weiterer Merkmale und Vorteile des erfindungsgemäßen Verfahrens wird hiermit explizit auf die Erläuterungen im Zusammenhang mit der erfindungsgemäßen Natrium-Chalkogen-Zelle und der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen:
Fig. 1 einen schematischen Querschnitt durch eine Ausführungsform einer erfindungsgemäßen Natrium-Chalkogen-Zelle; und
Fig. 2 eine Vergrößerung des in Fig. 1 markierten Bereichs.

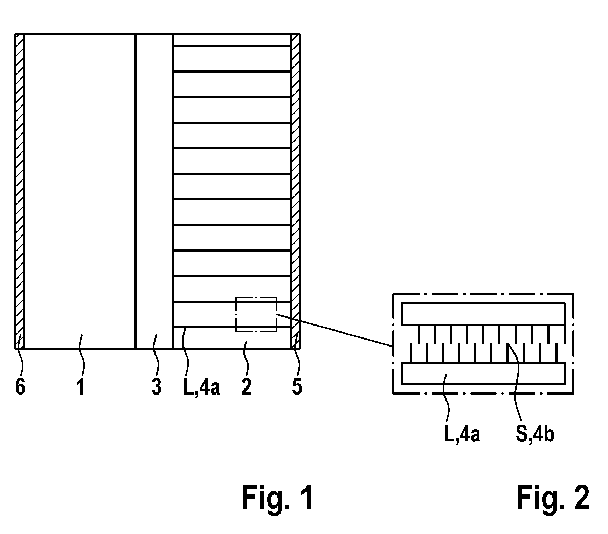

Figur 1 zeigt, dass die Natrium-Chalkogen-Zelle eine Natrium umfassende Anode 1 und eine Schwefel oder Sauerstoff umfassende Kathode 2 aufweist. Figur 1 veranschaulicht weiterhin, dass die Anode 1 einen Anodenstromkollektor 6 und die Kathode 2 einen Kathodenstromkollektor 5 aufweist. Figur 1 zeigt dabei insbesondere, dass die Anode 1 und die Kathode 2 durch einen Natriumionen leitenden und Elektronen nicht leitenden Festkörperelektrolyten 3 separiert sind. Der Natriumionen leitenden und Elektronen nicht leitenden Festkörperelektrolyten 3 kann beispielsweise aus polykristallinem β-Aluminat, polykristallinem, texturierten β-Aluminat, einem Natriumtitanat des vierwertigen Titans, beispielsweise der allgemeinen Formel (2), oder einem Verbundwerkstoff aus β-Aluminat und einem Natriumtitanat des vierwertigen Titans, beispielsweise der allgemeinen Formel (2), ausgebildet sein.

Ferner illustriert Figur 1, dass die Kathode 2 im Rahmen dieser Ausführungsform eine Vielzahl von Leitungselementen L aus einem Natriumionen und Elektronen leitenden Festkörperelektrolyten 4a umfasst, von denen jeweils ein Abschnitt den Natriumionen leitenden und Elektronen nicht leitenden Festkörperelektrolyten 3 und ein anderer Abschnitt den Kathodenstromkollektor 5 kontaktiert.

Figur 2 zeigt, dass im Rahmen der erfindungsgemässen Ausführungsform auf den Leitungselementen L Strukturen S aus einem Natriumionen und Elektronen leitenden Festkörperelektrolyten 4b ausgebildet sind. Hierbei kann es sich beispielsweise um nadelförmige, Natriumionen und Elektronen leitende Festkörperelektrolytkristalle handeln. Diese können beispielsweise mittels einer Hydrothermalsynthese auf den Leitungselementen L ausgebildet werden. Die Leitungselemente L und Strukturen S können beispielsweise aus einem Natriumionen und Elektronen leitenden Festkörperelektrolyt ausgebildet sein, welcher ein dreiwertiges Titan aufweisendes Natriumtitanat, beispielsweise der allgemeinen Formel (1), umfasst.

## Patentansprüche

1. Natrium-Chalkogen-Zelle, insbesondere eine Natrium-Schwefel-Zelle oder eine Natrium-Sauerstoff-Zelle, umfassend
- eine Anode (1), und
- eine Kathode (2),
wobei die Anode (1) Natrium und die Kathode (2) mindestens ein Chalkogen umfasst,
wobei die Anode (1) und die Kathode (2) durch mindestens einen Natriumionen leitenden und Elektronen nicht leitenden Festkörperelektrolyten (3) separiert sind, und
wobei die Kathode (2) mindestens einen Natriumionen und Elektronen leitenden Festkörperelektrolyten (4a,4b) umfasst, wobei die Kathode (2) mindestens ein Leitungselement (L) aus einem Natriumionen und Elektronen leitenden Festkörperelektrolyten (4a) umfasst, **dadurch gekennzeichnet, dass** auf dem oder den Leitungselement/en (L) Strukturen (S) aus einem Natriumionen und Elektronen leitenden Festkörperelektrolyten (4b) ausgebildet sind.

2. Natrium-Chalkogen-Zelle nach Anspruch 1, wobei ein Abschnitt des Leitungselements (L) den Natriumionen leitenden und Elektronen nicht leitenden Festkörperelektrolyten (3) und ein anderer Abschnitt des Leitungselements einen Kathodenstromkollektor (5) kontaktiert.

3. Natrium-Chalkogen-Zelle nach Anspruch 1 oder 2, wobei die Kathode (2) eine Vielzahl von Leitungselementen (L) aus einem Natriumionen und Elektronen leitenden Festkörperelektrolyten (4a) umfasst, von denen jeweils ein Abschnitt den Natriumionen leitenden und Elektronen nicht leitenden Festkörperelektrolyten (3) und ein anderer Abschnitt den Kathodenstromkollektor (5) kontaktiert.

4. Natrium-Chalkogen-Zelle nach Anspruch 1, wobei die Strukturen (S) durchnadelförmige, Natriumionen und Elektronen leitende Festkörperelektrolytkristalle (4b) ausgebildet sind.

5. Natrium-Chalkogen-Zelle nach einem der Ansprüche 1 bis 4, wobei der Natriumionen und Elektronen leitende Festkörperelektrolyt (4a,4b) ein Natriumtitanat umfasst, welches dreiwertiges Titan aufweist.

6. Natrium-Chalkogen-Zelle nach einem der Ansprüche 1 bis 5, wobei der Natriumionen und Elektronen leitende Festkörperelektrolyt ein Natriumtitanat der allgemeinen Formel (1):
Na₂Ti^{IV}ₙ₋ₓTi^{III}ₓO_{2n+1-x/2}:MO
umfasst, wobei 2 ≤ n ≤ 10 und 0 ≤ x ≤ n ist und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid steht.

7. Natrium-Chalkogen-Zelle nach einem der Ansprüche 1 bis 6, wobei der Natriumionen leitende und Elektronen nicht leitende Festkörperelektrolyt (3) ein Material umfasst, welches ausgewählt ist aus der Gruppe bestehend aus β-Aluminiumoxid, insbesondere texturiertem β-Aluminiumoxid, Natriumtitanaten des vierwertigen Titans, beispielsweise der allgemeinen Formel (2): Na₂Ti^{IV}ₙO₂ₙ₊₁:MO, wobei 2 ≤ n ≤ 10 ist und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid, oder Mischungen, insbesondere Verbundwerkstoffen, davon.

8. Natrium-Chalkogen-Zelle nach einem der Ansprüche 1 bis 7, wobei der Natriumionen leitende und Elektronen nicht leitende Festkörperelektrolyt (3) ein Natriumtitanat der allgemeinen Formel (2):
Na₂Ti^{IV}ₙO₂ₙ₊₁:MO
umfasst, wobei 2 ≤ n ≤ 10 und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid steht.

9. Natrium-Chalkogen-Zelle nach einem der Ansprüche 1 bis 8, wobei
- die Anode (1) aus metallischem Natrium oder einer Natriumlegierung ausgebildet ist, und
- das Chalkogen Schwefel oder Sauerstoff, insbesondere Schwefel, ist.

10. Verfahren zur Herstellung einer Natrium-Chalkogen-Zelle nach einem der Ansprüche 1 bis 9, umfassend die Verfahrensschritte:
a) Bereitstellen eines Leitungselements (L) aus einem Natriumionen und Elektronen leitenden Festkörperelektrolyten (4a) und
b) Ausbilden von Festkörperelektrolytstrukturen (S,4b) auf dem Leitungselement (L), insbesondere durch Hydrothermalsynthese,
wobei die in Verfahrensschritt b) ausgebildeten
Festkörperelektrolytstrukturen (S,4b) Natriumionen und Elektronen leitend sind oder in einem Verfahrensschritt c) in Natriumionen und Elektronen leitende Festkörperelektrolytstrukturen (S,4b) umgewandelt werden.

## Claims

1. Sodium-chalcogen cell, in particular a sodium-sulphur cell or a sodium-oxygen cell, comprising
- an anode (1) and
- a cathode (2),
where the anode (1) comprises sodium and the cathode (2) comprises at least one chalcogen, where the anode (1) and the cathode (2) are separated by at least one solid-state electrolyte (3) which conducts sodium ions and does not conduct electrons and
where the cathode (2) comprises at least one solid-state electrolyte (4a, 4b) which conducts sodium ions and electrons, where the cathode (2) comprises at least one conduction element (L) composed of a solid-state electrolyte (4a) which conducts sodium ions and electrons, **characterized in that** structures (S) composed of a solid-state electrolyte (4b) which conducts sodium ions and electrons are formed on the conduction element(s) (L).

2. Sodium-chalcogen cell according to Claim 1, wherein a section of the conduction element (L) contacts the solid-state electrolyte (3) which conducts sodium ions and does not conduct electrons and another section of the conduction element contacts a cathode current collector (5).

3. Sodium-chalcogen cell according to Claim 1 or 2, wherein the cathode (2) comprises a plurality of conduction elements (L) which are composed of a solid-state electrolyte (4a) which conducts sodium ions and electrons and of which in each case a section contacts the solid-state electrolyte (3) which conducts sodium ions and does not conduct electrons and another section contacts the cathode current collector (5).

4. Sodium-chalcogen cell according to Claim 1, wherein the structures (S) are formed by acicular solid-state electrolyte crystals (4b) which conduct sodium ions and electrons.

5. Sodium-chalcogen cell according to any of Claims 1 to 4, wherein the solid-state electrolyte (4a, 4b) which conducts sodium ions and electrons comprises a sodium titanate which comprises trivalent titanium.

6. Sodium-chalcogen cell according to any of Claims 1 to 5, wherein the solid-state electrolyte which conducts sodium ions and electrons comprises a sodium titanate of the general formula (1):
Na₂Ti^{IV}ₙ₋ₓTi^{III}ₓO_{2n+1-x/2}:MO
where 2 ≤ n ≤ 10 and 0 ≤ × ≤ n and MO is one or more foreign atom oxides selected from the group consisting of Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ and Bi₂O₅, or represents no foreign atom oxide.

7. Sodium-chalcogen cell according to any of Claims 1 to 6, wherein the solid-state electrolyte (3) which conducts sodium ions and does not conduct electrons comprises a material selected from the group consisting of β-aluminium oxide, in particular textured β-aluminium oxide, sodium titanates of tetravalent titanium, for example of the general formula (2): Na₂Ti^{IV}ₙO₂ₙ₊₁:MO, where 2 ≤ n ≤ 10 and MO is one or more foreign atom oxides selected from the group consisting of Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ and Bi₂O₅, or represents no foreign atom oxide, or mixtures, in particular composites, thereof.

8. Sodium-chalcogen cell according to any of Claims 1 to 7, wherein the solid-state electrolyte (3) which conducts sodium ions and does not conduct electrons comprises a sodium titanate of the general formula (2):
Na₂Ti^{IV}ₙO₂ₙ₊₁:MO
where 2 ≤ n ≤ 10 and MO is one or more foreign atom oxides selected from the group consisting of Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ and Bi₂O₅, or represents no foreign atom oxide.

9. Sodium-chalcogen cell according to any of Claims 1 to 8, wherein
- the anode (1) is composed of metallic sodium or a sodium alloy and
- the chalcogen is sulphur or oxygen, in particular sulphur.

10. Process for producing a sodium-chalcogen cell according to any of Claims 1 to 9, which comprises the process steps:
a) provision of a conduction element (L) composed of a solid-state electrolyte (4a) which conducts sodium ions and electrons and
b) formation of solid-state electrolyte structures (S, 4b) on the conduction element (L), in particular by hydrothermal synthesis,
where the solid-state electrolyte structures (S, 4b) formed in process step b) conduct sodium ions and electrons or are converted in a process step c) into solid-state electrolyte structures (S, 4b) which conduct sodium ions and electrons.

## Revendications

1. Cellule sodium-chalcogène, notamment cellule sodium-soufre ou cellule sodium-oxygène, comprenant :
- une anode (1) et
- une cathode (2),
l'anode (1) comprenant du sodium et la cathode (2) au moins un chalcogène,
l'anode (1) et la cathode (2) étant séparées par au moins un électrolyte solide (3) qui conduit les ions sodium et qui ne conduit pas les électrons, et
la cathode (2) comprenant au moins un électrolyte solide (4a, 4b) qui conduit les ions sodium et les électrons, la cathode (2) comprenant au moins un élément de conduction (L) en un électrolyte solide (4a) qui conduit les ions sodium et les électrons, **caractérisée en ce que** des structures (S) en un électrolyte (4b) qui conduit les ions sodium et les électrons sont formées sur le ou les éléments de conduction (L).

2. Cellule sodium-chalcogène selon la revendication 1, dans laquelle une section de l'élément de conduction (L) est en contact avec l'électrolyte solide (3) qui conduit les ions sodium et qui ne conduit pas les électrons, et une autre section de l'élément de conduction avec un collecteur de courant cathodique (5).

3. Cellule sodium-chalcogène selon la revendication 1 ou 2, dans laquelle la cathode (2) comprend une pluralité d'éléments de conduction (L) en un électrolyte solide (4a) qui conduit les ions sodium et les électrons, une section de ceux-ci étant à chaque fois en contact avec l'électrolyte solide (3) qui conduit les ions sodium et qui ne conduit pas les électrons, et une autre section avec le collecteur de courant cathodique (5).

4. Cellule sodium-chalcogène selon la revendication 1, dans laquelle les structures (S) sont formées par des cristaux d'électrolyte solide (4b) aciculaires, qui conduisent les ions sodium et les électrons.

5. Cellule sodium-chalcogène selon l'une quelconque des revendications 1 à 4, dans laquelle l'électrolyte solide (4a, 4b) qui conduit les ions sodium et les électrons comprend un titanate de sodium, qui comprend du titane trivalent.

6. Cellule sodium-chalcogène selon l'une quelconque des revendications 1 à 5, dans laquelle l'électrolyte solide qui conduit les ions sodium et les électrons comprend un titanate de sodium de formule générale (1) :
Na₂Ti^{IV}ₙ₋ₓTi^{III}ₓO_{2n+1-x/2} :MO
dans laquelle 2 ≤ n ≤ 10 et 0 ≤ x ≤ n, et MO représente un ou plusieurs oxydes d'atomes étrangers, qui sont choisis dans le groupe constitué par Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ et Bi₂O₅, ou aucun oxyde d'atomes étrangers.

7. Cellule sodium-chalcogène selon l'une quelconque des revendications 1 à 6, dans laquelle l'électrolyte solide (3) qui conduit les ions sodium et qui ne conduit pas les électrons comprend un matériau qui est choisi dans le groupe constitué par l'oxyde d'aluminium β,notamment l'oxyde d'aluminium β texturé, les titanates de sodium de titane tétravalent, par exemple de formule générale (2) : Na₂Ti^{IV}ₙO₂ₙ₊₁ : MO, avec 2 ≤n ≤ 10, et MO représentant un ou plusieurs oxydes d'atomes étrangers, qui sont choisis dans le groupe constitué par Na₂O, Li₂O, MgO, CaO, BaO, MnO, ZnO, FeO, Ti₂O₃, Al₂O_{3,}Ga₂O₃, Nb₂O₃, Mn₂O₃, Fe₂O₃, ZrO₂, MnO₂, SiO₂, Nb₂O₅, Ta₂O₅ et Bi₂O₅, ou aucun oxyde d'atomes étrangers, ou leurs mélanges, notamment leurs matériaux composites.

8. Cellule sodium-chalcogène selon l'une quelconque des revendications 1 à 7, dans laquelle l'électrolyte solide (3) qui conduit les ions sodium et qui ne conduit pas les électrons comprend un titanate de sodium de formule générale (2) :
Na₂Ti^{IV}ₙO₂ₙ₊₁ : MO,
dans laquelle 2 ≤ n ≤ 10, et MO représente un ou plusieurs oxydes d'atomes étrangers, qui sont choisis dans le groupe constitué par Na₂O, Li₂O MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ et Bi₂O₅, ou aucun oxyde d'atomes étrangers.

9. Cellule sodium-chalcogène selon l'une quelconque des revendications 1 à 8, dans laquelle
- l'anode (1) est constituée de sodium métallique ou d'un alliage de sodium, et
- le chalcogène est le soufre ou l'oxygène, notamment le soufre.

10. Procédé de fabrication d'une cellule sodium-chalcogène selon l'une quelconque des revendications 1 à 9, comprenant les étapes de procédé suivantes :
a) la préparation d'un élément de conduction (L) en un électrolyte solide (4a) qui conduit les ions sodium et les électrons, et
b) la formation de structures d'électrolyte solide (S, 4b) sur l'élément de conduction (L), notamment par synthèse hydrothermale,
les structures d'électrolyte solide (S, 4b) formée à l'étape de procédé b) conduisant les ions sodium et les électrons ou étant transformées lors d'une étape de procédé c) en structures d'électrolyte solide (S, 4b) qui conduisent les ions sodium et les électrons.
